(19) Europäisches Patentamt
European Patent Office
Office européen des brevets

(11) **EP 3 222 456 B1**

(12) **FASCICULE DE BREVET EUROPEEN**

(45) Date de publication et mention de la délivrance du brevet:
**03.07.2019 Bulletin 2019/27**

(21) Numéro de dépôt: **17159914.5**

(22) Date de dépôt: **08.03.2017**

(51) Int Cl.:
*B60K 23/02* (2006.01)  *G05G 1/38* (2008.04)
*G05G 5/03* (2008.04)  *B60K 26/02* (2006.01)
*B60T 7/04* (2006.01)  *B60T 8/32* (2006.01)
*B60T 8/40* (2006.01)  *B60T 11/18* (2006.01)

(54) **DISPOSITIF DE GÉNÉRATION D'EFFORT**

VORRICHTUNG ZUR ERZEUGUNG EINER KRAFT

DEVICE FOR GENERATING A FORCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2016 FR 1652372**

(43) Date de publication de la demande:
**27.09.2017 Bulletin 2017/39**

(73) Titulaire: **Raicam Driveline S.r.l.**
**12084 Mondovì (CN) (IT)**

(72) Inventeurs:
• **MOLLIER, Christophe**
**80009 Amiens (FR)**
• **MAUREL, Hervé**
**80000 Amiens (FR)**
• **DI LISA, Alessandro**
**12084 Mondovi (IT)**

(74) Mandataire: **Fioravanti, Corrado**
**Jacobacci & Partners S.p.A.**
**Corso Emilia 8**
**10152 Torino (IT)**

(56) Documents cités:
**EP-A2- 2 927 064    FR-A1- 2 848 518**
**FR-A1- 2 961 322    US-A1- 2005 082 909**

## Description

### Domaine technique

L'invention se rapporte au domaine des systèmes de commande à pédale, notamment pour la commande d'un organe dans un véhicule automobile, et plus particulièrement à un dispositif de génération d'effort pour une pédale de commande dans un tel système.

### Arrière-plan technologique

Des systèmes de commande à pédale sont utilisés de longue date dans l'industrie automobile, notamment pour la commande d'un actionneur de freinage ou d'un actionneur de transmission.

Lorsque l'actionneur de freinage ou de transmission comporte un maitre-cylindre hydraulique auquel la pédale de commande est directement couplée, une force de réaction générée par le maitre-cylindre hydraulique peut être retransmise à la pédale de commande.

Lorsque l'actionneur de freinage ou de transmission ou autre organe commandé n'est pas capable de générer une force de réaction hydraulique sur la pédale de commande, par exemple dans le cas où l'actionneur est découplé de la pédale de commande et commandé électroniquement sur la base d'une détection de la position de la pédale ou d'un élément lié à la pédale, il en résulte un changement ergonomique significatif pour l'utilisateur habitué à la force de réaction hydraulique. Plus généralement, une force de réaction est utile pour permettre à un utilisateur de ressentir la réaction du système commandé à l'action de l'utilisateur sur la pédale de commande.

Ainsi, il existe un besoin de dispositifs de génération d'effort capables de rétroagir sur une pédale de commande de manière à produire un effort en réaction à un actionnement de la pédale, et notamment de manière à simuler une force de réaction d'un maitre-cylindre hydraulique.

L'état de la technique dans ce domaine est illustré par la demande WO-A-2014048661, qui fournit un dispositif de commande d'embrayage à pédale qui simule une force de réaction hydraulique au moyen d'un bras de pédale interagissant avec un levier pivotant soumis à la réaction d'un ressort, dans lequel le bras de pédale se déplace le long d'un contour du levier pivotant lorsque la pédale est actionnée. Ce dispositif présente toutefois un encombrement assez élevé et offre des possibilités limitées en termes d'adaptation de l'effort de réaction.

Un dispositif de génération d'effort selon le préambule de la revendication 1 est connu du document US 2005/082909 A1 et du document EP 2 927 064 A2.

### Résumé

Une idée à la base de l'invention est de fournir un dispositif de génération d'effort pour une pédale de commande qui ne présente pas au moins certains des inconvénients de l'art antérieur. Certains aspects de l'invention partent de l'idée de fournir un dispositif de génération d'effort qui s'intègre facilement dans l'environnement d'un véhicule automobile comportant des composants standardisés, par exemple dans un tablier avant de l'habitacle du véhicule automobile et/ou un pédalier d'embrayage.

L'invention fournit un dispositif de génération d'effort pour une pédale de commande, le dispositif comportant :

un boitier creux, allongé présentant un axe longitudinal, une extrémité longitudinale avant fermée par une paroi de fond et une extrémité longitudinale arrière munie d'une ouverture,

une tige d'entrée engagée dans l'ouverture du boîtier sensiblement parallèlement à l'axe du boîtier et présentant une extrémité arrière destinée à être accouplée à une pédale de commande à l'extérieur du boîtier et une extrémité avant logée dans le boitier,

un ressort déformable selon l'axe du boîtier présentant un extrémité avant en appui directement ou indirectement contre la paroi de fond et une extrémité arrière déplaçable dans le boîtier selon l'axe du boîtier, et

un convertisseur cinématique, non-linéaire et passif, agencé entre l'extrémité avant de la tige d'entrée et l'extrémité arrière du ressort pour convertir un déplacement de la tige d'entrée en un déplacement de l'extrémité arrière du ressort,

la tige d'entrée étant déplaçable le long d'une course d'actionnement sensiblement parallèle à l'axe du boîtier depuis une position de repos dans laquelle la saillie de la tige d'entrée en dehors du boitier est maximale vers des positions d'actionnement pour déformer le ressort.

La réalisation d'un dispositif allongé, éventuellement cylindrique, et présentant un encombrement réduit est facilitée par ces caractéristiques, notamment l'intégration du convertisseur cinématique dans le boitier et le mode de sollicitation essentiellement axial du convertisseur cinématique.

Dans la présente invention, on entend par « convertisseur cinématique » un système transformant un déplacement, par exemple celui de la tige d'entrée, uniquement en un autre déplacement, par exemple celui de l'extrémité arrière du ressort, notamment sans stockage d'énergie. Autrement dit, le convertisseur cinématique convertit tout déplacement de la tige d'entrée, de sa position de repos vers une des positions d'actionnement, en un déplacement de l'extrémité arrière du ressort.

Selon l'invention, le convertisseur cinématique est non-linéaire. Ainsi, il est possible de créer une relation non-linéaire entre le déplacement axial de la tige d'entrée et la déformation axiale du ressort à l'aide du convertisseur cinématique.

Selon des modes de réalisation avantageux, un tel dispositif peut présenter une ou plusieurs des caractéristiques suivantes.

Selon un mode de réalisation, le rendement de conversion axial du convertisseur cinématique est défini comme un rapport entre un déplacement axial de l'extrémité arrière du ressort et un déplacement axial de l'extrémité avant de la tige d'entrée,

le convertisseur cinématique présentant successivement, le long de la course d'actionnement de la tige d'entrée, une première plage de fonctionnement dans laquelle le rendement de conversion axial du convertisseur cinématique est croissant et une deuxième plage de fonctionnement dans laquelle le rendement de conversion axial du convertisseur cinématique est décroissant.

Grâce à ces caractéristiques, le convertisseur cinématique crée une relation non-linéaire entre le déplacement axial de la tige d'entrée et la déformation axiale du ressort, ce qui permet de simuler des efforts de réaction variés, avec au moins un point d'inflexion le long de la course d'actionnement de la tige d'entrée.

Dans des modes de réalisation, le convertisseur cinématique comporte un élément glisseur logé dans le boîtier et guidé en translation le long de l'axe du boîtier, l'extrémité arrière du ressort étant en appui contre une face avant de l'élément glisseur.

Dans un mode de réalisation, le convertisseur cinématique comporte un piston logé dans le boîtier et guidé en translation le long de l'axe du boîtier, l'extrémité avant de la tige d'entrée étant liée à une face arrière du piston. Un tel piston permet d'améliorer le guidage de la tige d'entrée et ainsi de limiter ou supprimer une composante d'effort désaxée sur le convertisseur cinématique.

Le convertisseur cinématique peut être réalisé de nombreuses manières, par exemple avec des pièces déformables et/ou avec des pièces mobiles entre elles. Notamment, le convertisseur cinématique peut comporter une ou plusieurs pièces déformables selon un ou plusieurs modes de déformation, par exemple flexion, torsion ou compression. Alternativement ou en combinaison, le convertisseur cinématique peut comporter des pièces accouplées de manière mobile selon un ou plusieurs degrés de liberté, par exemple selon une rotation d'axe parallèle à l'axe du boitier, une rotation d'axe perpendiculaire à l'axe du boitier, une translation hélicoïdale d'axe parallèle à l'axe du boitier ou un guidage rectiligne, notamment parallèle à l'axe du boitier.

Dans un mode de réalisation, qui exploite principalement des rotations d'axe parallèle à l'axe du boitier, le piston est guidé en translation hélicoïdale dans le boitier par l'action d'un filetage extérieur du piston et/ou d'un filetage intérieur du boitier, l'élément glisseur étant immobilisé en rotation par rapport à l'axe du boîtier, le convertisseur cinématique comportant en outre une biellette de transmission présentant une extrémité arrière liée par une première rotule au piston et une extrémité avant liée par une deuxième rotule à l'élément glisseur, la biellette de transmission présentant une orientation inclinée par rapport l'axe du boîtier dans la position de repos de la tige d'entrée, la biellette de transmission étant configurée pour, sous l'effet de la rotation du piston autour de l'axe du boîtier le long de la course d'actionnement de la tige d'entrée, se redresser le long de l'axe du boîtier dans la première plage de fonctionnement et s'incliner à nouveau par rapport l'axe du boîtier dans la deuxième plage de fonctionnement.

De préférence, plusieurs biellettes de transmission parallèles sont agencées entre le piston et l'élément glisseur, les biellettes de transmission étant distribuées de manière régulière dans une direction circonférentielle autour d'un axe du piston.

Dans un autre mode de réalisation, qui exploite principalement des flexions d'axe perpendiculaire à l'axe du boitier, le convertisseur cinématique comporte en outre une lame de transmission flexible arquée présentant une extrémité arrière couplée au piston et une extrémité avant couplée à l'extrémité arrière du ressort ou à l'élément glisseur, la lame de transmission présentant un ventre s'étendant transversalement vers une paroi périphérique du boitier dans la position de repos de la tige d'entrée, le boitier présentant un élément de restriction fixé dans le boitier à une position située entre l'élément glisseur et le ventre de la lame de transmission dans la position de repos de la tige d'entrée, l'élément de restriction délimitant un passage de plus petite dimension que la section creuse du boitier, la lame de transmission étant engagée dans le passage de l'élément de restriction de sorte que, le long de la course d'actionnement de la tige d'entrée, le ventre de la lame de transmission s'écrase en pénétrant dans le passage et augmente ainsi l'extension de la lame de transmission le long de l'axe du boîtier dans la première plage de fonctionnement et le ventre de la lame de transmission se redéploye en ressortant du passage de l'autre côté de l'élément de restriction et diminue ainsi l'extension de la lame de transmission le long de l'axe du boîtier dans la deuxième plage de fonctionnement.

Dans un autre mode de réalisation, qui exploite principalement des rotations d'axe perpendiculaire à l'axe du boitier, le convertisseur cinématique comporte en outre :

quatre bras rigides assemblés sous la forme d'un quadrilatère articulé, le quadrilatère articulé présentant un sommet arrière couplé au piston ou à la tige d'entrée et un sommet avant diagonalement opposé couplé à l'élément glisseur ou à l'extrémité arrière du ressort, le quadrilatère articulé présentant deux sommets intermédiaires diagonalement opposés disposés en saillie transversalement vers une paroi périphérique du boitier dans la position de repos de la tige d'entrée, le boitier présentant un élément de restriction fixé dans le boitier à une position située devant les deux sommets intermédiaires du quadrilatère articulé dans la position de repos de la tige d'entrée, l'élément de restriction délimitant un passage présentant successivement une portion arrière convergente et une portion avant divergente dans la section creuse du boîtier, les deux sommets intermédiaires du quadrilatère articulé étant munis d'organes de glissement ou de roulement coopérant avec l'élément de restriction de sorte que, le long de la course d'actionnement de la tige d'entrée, les deux sommets intermédiaires du quadrilatère articulé se rapprochent en passant dans la portion arrière convergente du passage, ce qui allonge le quadrilatère articulé le long de l'axe du boîtier dans la première plage de fonctionnement, et les deux sommets intermédiaires du quadrilatère articulé s'écartent en passant dans la portion avant divergente du passage, ce qui réduit le quadrilatère articulé le long de l'axe du boîtier dans la deuxième plage de fonctionnement.

Selon d'autres modes de réalisations, on exploite les propriétés de cycloïdes pour produire la conversion cinématique non-linéaire. Par exemple dans ce cas, le convertisseur cinématique comporte en outre :

une roue dentée présentant un axe de rotation perpendiculaire à l'axe du boitier, la roue dentée étant monté en rotation dans un palier solidaire de l'un parmi le piston et le boitier,

une crémaillère parallèle à l'axe du boitier engrenant avec la roue dentée et solidaire de l'autre parmi le piston et le boitier, et

une biellette de transmission présentant une extrémité avant liée à l'extrémité arrière du ressort ou à l'élément glisseur par un premier pivot d'axe parallèle à l'axe de rotation de la roue dentée et une extrémité arrière liée à la roue dentée par un second pivot d'axe parallèle à l'axe de rotation de la roue dentée.

Selon un autre exemple, le convertisseur cinématique comporte en outre : une roue dentée présentant un axe de rotation perpendiculaire à l'axe du boitier, la roue dentée étant monté en rotation dans un palier solidaire de l'élément glisseur, une crémaillère parallèle à l'axe du boitier engrenant avec la roue dentée et solidaire du boitier, et

une biellette de transmission présentant une extrémité arrière liée au piston par un premier pivot d'axe parallèle à l'axe de rotation de la roue dentée et une extrémité avant liée à la roue dentée par un second pivot d'axe parallèle à l'axe de rotation de la roue dentée.

Selon un mode de réalisation particulier, un insert allongé s'étend dans le boitier le long de l'axe du boitier en saillie depuis la paroi de fond, l'élément glisseur étant engagé sur l'insert et le ressort étant engagé sur l'insert entre l'élément glisseur entre la paroi de de fond, la crémaillère étant portée par l'insert.

De préférence dans ce cas, l'insert porte deux crémaillères sur deux surfaces opposées de l'insert et dans lequel deux roues dentées sont montées en rotation sur l'élément glisseur pour engrener respectivement avec chacune des deux crémaillères.

Selon encore un autre exemple, le convertisseur cinématique comporte en outre :

une roue dentée présentant un axe de rotation perpendiculaire à l'axe du boitier, la roue dentée étant monté en rotation dans un palier solidaire de l'élément glisseur, et une crémaillère parallèle à l'axe du boitier engrenant avec la roue dentée et solidaire du boitier,

l'extrémité avant de la tige d'entrée étant liée à la roue dentée par un second pivot d'axe parallèle à l'axe de rotation de la roue dentée.

Ainsi, il est possible de se passer d'un piston à l'arrière du convertisseur cinématique dans ce cas.

Avantageusement, la distance entre le second pivot et le centre de la roue dentée est inférieur au rayon nominal de la roue dentée. Ainsi, selon la position du second pivot, le rapport entre le rayon portant le second pivot et le rayon nominal de roulement de la roue peut être sélectionné à toute valeur entre 0 et 1 pour régler finement la réponse du convertisseur cinématique.

La roue dentée ou pignon peut avoir un diamètre primitif non uniforme, par exemple avec une forme elliptique.

Un ou plusieurs capteurs de position peuvent être prévus dans le dispositif de génération d'effort pour offrir, outre la fonction de génération d'effort, une fonction de mesure de position permettant de détecter finement le déplacement de la pédale de commande ou d'une pièce qui lui est liée et produire un signal de mesure pouvant alimenter un dispositif de commande électronique. Selon un mode de réalisation, un tel capteur de position est configuré pour détecter une position axiale du piston. Une mesure de position peut aussi être effectuée en dehors dispositif de génération d'effort, par exemple directement sur la pédale de commande.

Un ou plusieurs autres éléments élastiques peuvent être prévus dans le dispositif de génération d'effort pour produire des efforts additionnels. Par exemple, un second ressort est en appui entre le piston et la paroi de fond du boitier.

Le ou les ressorts peuvent être fabriqués selon différentes techniques. Avantageusement, le ressort est un ressort hélicoïdal ou un ressort à lame. Le ressort peut être linéaire ou non-linéaire.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- **La figure 1** est une vue schématique de principe d'un système de commande à pédale dans lequel des modes de réalisation de l'invention peuvent être utilisés,

- **La figure 2** est un graphique représentant des courbes caractéristiques d'effort de réaction en fonction du déplacement pouvant être mises en oeuvre dans des modes de réalisation de l'invention,

- **La figure 3** est une vue schématique en coupe axiale d'un dispositif de génération d'effort selon un premier mode de réalisation,

- **La figure 4** est une vue schématique en coupe axiale d'un dispositif de génération d'effort selon un deuxième mode de réalisation,

- **La figure 5** est une vue agrandie d'une roue dentée et d'une biellette de la figure 4,

- **La figure 6** est une vue schématique en coupe axiale d'un dispositif de génération d'effort selon un troisième mode de réalisation,

- **La figure 7** est une vue schématique en coupe axiale d'un dispositif de génération d'effort selon un quatrième mode de réalisation,

- **La figure 8** est une vue schématique en coupe axiale d'un dispositif de génération d'effort selon un cinquième mode de réalisation,

- **La figure 9** est une vue schématique de principe d'un dispositif de génération d'effort selon un sixième mode de réalisation,

- **La figure 10** une vue agrandie en perspective d'un convertisseur cinématique de la figure 9 dans une position basculée,

- **La figure 11** une vue analogue à la figure 10 montrant le convertisseur cinématique dans une position redressée,

- **La figure 12** est une vue schématique en coupe axiale d'un dispositif de génération d'effort selon un septième mode de réalisation.

**Description détaillée de modes de réalisation**

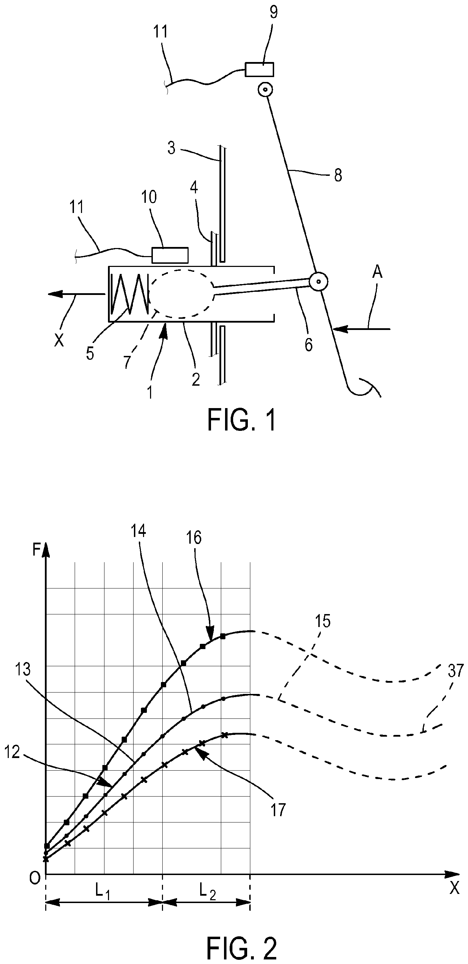

La figure 1 représente un dispositif de génération d'effort 1, ou émulateur d'effort, dans un environnement d'exploitation correspondant ici à un système de commande à pédale pour un actionneur d'embrayage contrôlé électroniquement. Un tel actionneur d'embrayage (non représenté) est aussi connu sous la dénomination anglo-saxonne *Clutch by Wire.*

Le dispositif de génération d'effort comporte un boitier allongé 2 qui est fixé sur un appui fixe par rapport au châssis du véhicule, par exemple un tablier avant 3 de l'habitacle, par tout moyen approprié, par exemple un dispositif de fixation à baïonnette 4 selon la technique connue. De préférence dans le cas d'une fixation au tablier avant, un joint d'étanchéité entoure le boitier 2 pour isoler l'habitacle du compartiment moteur.

Le boitier 2 présente un axe longitudinal X et contient un ressort de compression 5 à l'extrémité avant, une tige d'entrée 6 à l'extrémité arrière et un convertisseur cinématique 7 agencé entre eux. La tige d'entrée 6 est couplée directement ou indirectement à une pédale de commande 8 pour recevoir un effort d'actionnement indiqué schématiquement par la flèche A. Le ressort de compression 5 permet de générer un effort de rappel tendant à ramener la tige d'entrée 6, et donc la pédale de commande 8, vers une position de repos, correspondant à la position de recul maximale de la tige d'entrée 6. D'autres ressorts de rappel peuvent également être prévus dans un tel système de commande.

La tige d'entrée 6 est orientée globalement parallèlement à l'axe longitudinal du boitier 2 mais peut présenter un certain débattement angulaire de part et d'autre de cet axe, par exemple dans un secteur de 10°, pour suivre le mouvement pivotant de la pédale de commande 8.

Un ou plusieurs capteurs de position peuvent être prévus dans ce système de commande pour produire des signaux de mesure de position d'une ou plusieurs pièces à transmettre à une unité de commande électronique. La figure 1 montre schématiquement un capteur de position 9 pour mesurer une position de la pédale de commande 8 et un capteur de position 10 pour mesurer une position d'une pièce mobile du dispositif de génération d'effort 1, ainsi que le câblage 11 des capteurs de position 9 et 10. Le capteur est de préférence linéaire et sans contact. Son connecteur est de préférence placé du côté du compartiment moteur.

Le dispositif de génération d'effort 1 sert à produire une force de réaction F sur la tige d'entrée 6 en réponse à un actionnement de la tige d'entrée 6 par l'effort d'actionnement A. Cet effort, produit ici à l'aide d'une pédale de commande, pourrait être appliqué d'autres manières sans changer le fonctionnement du dispositif de génération d'effort 1.

Pour des raisons d'ergonomie, différentes caractéristiques peuvent être souhaitées pour la force de réaction F générée par le dispositif de génération d'effort 1 sur la tige d'entrée 6. La courbe 12 de la figure 2 représente un exemple d'une courbe caractéristique de la force de réaction F en fonction du déplacement x de la tige d'entrée 6 le long de l'axe X, à partir de la position de repos. On voit que la courbe 12 présente une portion croissante 13 de forme concave le long d'une plage d'actionnement $L_1$, c'est-à-dire avec une dérivée seconde positive, et une portion croissante 14 de forme convexe le long d'une plage d'actionnement $L_2$, c'est-à-dire avec une dérivée seconde négative. Un point d'inflexion est donc présent à la jonction des plages d'actionnement $L_1$ et $L_2$. Une portion décroissante 15 est préférentiellement prévue au-delà de la plage d'actionnement $L_2$, puis éventuellement une portion croissante 37, juste avant la butée de fin de course. Cette forme générale de courbe comportant une bosse suivie d'une vallée est semblable à une courbe d'embrayage hydraulique conventionnelle.

On va maintenant décrire plusieurs modes de réalisation du dispositif de génération d'effort 1 permettant de produire, entre autres, une force de réaction ayant les propriétés susmentionnées de la courbe 12. Pour cela, il est possible de jouer sur deux propriétés du convertisseur cinématique 7 : d'une part la courbe de déformation du ressort en fonction du déplacement de la tige d'entrée 6 (fonction de transfert cinématique), et d'autre part le facteur de transfert d'effort de réaction entre le ressort et la tige d'entrée 6.

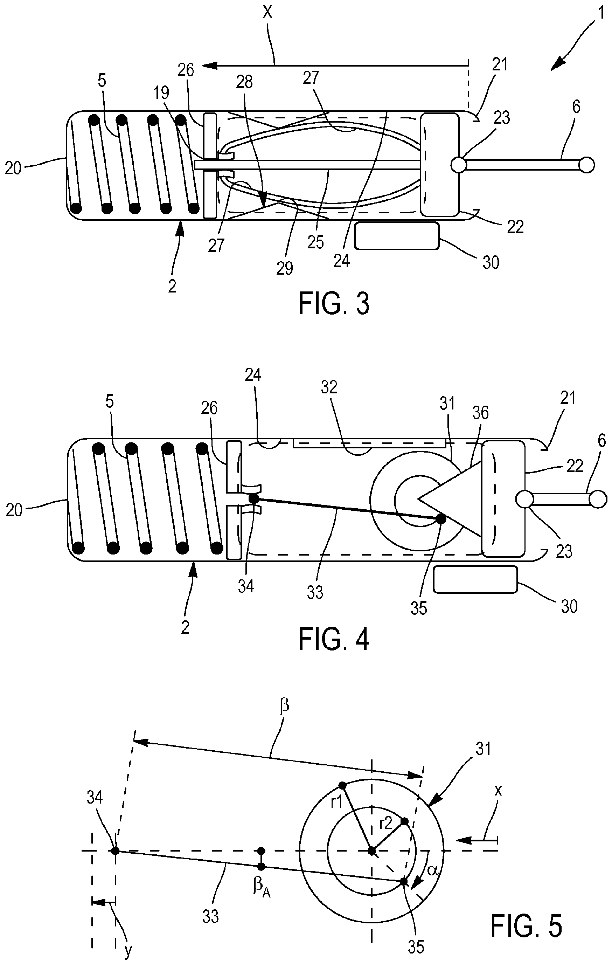

Sur la figure 3, les éléments analogues ou identiques à ceux de la figure 1 sont désignés par le même chiffre de référence. Le boitier 2 présente ici une forme cylindrique allongée selon l'axe X avec une paroi de fond 20 contre laquelle s'appuie le ressort 5 et une ouverture 21 dans laquelle la tige d'entrée 6 est engagée. La tige d'entrée 6 est liée à la face arrière d'un piston 22, par exemple par une rotule 23. Le piston 22 est guidé en translation axiale par la paroi périphérique 24 du boitier 2. Une tige de butée 25 fait saillie axialement de la face avant du piston 22 et est engagée au centre du ressort 5 dans lequel elle peut coulisser librement au cours de l'actionnement, jusqu'à venir buter contre la paroi de fond 20 dans la position d'avance maximale de la tige d'entrée 6.

Sur la face arrière du ressort 5 est posé un insert glissant 26 qui est également guidé en translation axiale par la paroi périphérique 24 du boitier 2. La tige de butée 25 passe librement à travers un trou central 19 de l'insert glissant 26 et ne génère aucune force substantielle sur l'insert glissant 26. Entre le piston 22 et l'insert glissant 26 sont insérées plusieurs lames de transmission 27, de forme arquée, réalisées en matière élastique, par exemple métallique, synthétique composite, et présentant chacune un ventre s'étendant transversalement vers la paroi périphérique 24 du boitier 2 dans la position de repos de la tige d'entrée 6, telle qu'illustrée sur la figure 3. Les lames de transmission 27 réalisent une conversion cinématique non-linéaire par l'effet de leurs déformations en flexion au cours de l'actionnement.

Un élément de restriction 28 est fixé dans le boitier 2 entre l'insert glissant 26 et les ventres des lames de transmission 27. L'élément de restriction 28 délimite un passage 29 de plus petite dimension que la section creuse du boitier 2, dans lequel les lames de transmission 27 sont engagées. Au cours de l'actionnement de la tige d'entrée 6 à partir de la figure 3, les ventres des lames de transmission 27 commencent par s'écraser en pénétrant dans le passage 29, ce qui augmente ainsi l'extension de la lame de transmission le long de l'axe X. Cette portion de la course d'actionnement correspond à un rendement de conversion croissant. Puis, les ventres des lames de transmission 27 se redéploient en ressortant du passage 29 de l'autre côté de l'élément de restriction 28 et diminuent ainsi l'extension des lames de transmission 27 le long de l'axe X par flambage. Cette portion de la course d'actionnement correspond à un rendement de conversion décroissant.

En augmentant le rapport entre la dimension transversale des lames de transmission 27 et leur dimension longitudinale, il est éventuellement possible de réaliser une courbe de conversion décroissante (portion 15) sur la suite de la course d'actionnement. En adaptant le profil de l'élément de restriction 28, il est aussi possible de produire une remontée de la courbe de conversion (portion 37) juste avant la butée de fin de course.

L'insert glissant 26 et le piston 22 permettent d'orienter les efforts dans la direction axiale X du boitier 2 et de répartir transversalement les efforts sur respectivement les lames de transmission arquées et sur la section du ressort 5.

Un capteur de position 30 est agencé le long de la paroi périphérique 24 du boitier 2 à l'extérieur pour détecter la position du piston 22, par exemple par une détection magnétique. Pour cela, un aimant permanant peut être fixé sur ou dans le piston 22. Le capteur de position 30 peut être un capteur à effet Hall.

Sur la figure 4, les éléments analogues ou identiques à ceux de la figure 3 sont désignés par le même chiffre de référence et ne seront pas décrits à nouveau.

Ici, le convertisseur cinématique comporte un système de roue dentée et crémaillère pour exploiter les propriétés des cycloïdes. Plus précisément, une roue dentée 31 présentant un axe de rotation perpendiculaire à l'axe du boitier 2 est montée en rotation dans un palier 36 solidaire du piston 22. Une crémaillère 32 est fixée sur l'intérieur de la paroi périphérique 24 parallèlement à l'axe X pour engrener avec la roue dentée 31. Une biellette de transmission 33 présente une extrémité avant 34 liée à l'insert glissant 26 par un pivot d'axe parallèle à l'axe de rotation de la roue dentée 31 et une extrémité arrière 35 liée à la roue dentée 31 par un pivot d'axe également parallèle à l'axe de rotation de la roue dentée 31.

La figure 5 est une vue de principe agrandie de la roue dentée 31 avec la biellette de transmission 33. On appelle $r_1$ le rayon nominal de la roue dentée 31 et $r_2$ la distance entre l'extrémité arrière 35 et le centre de la roue dentée 31, où $r_2 < r_1$. Si on considère que la longueur B de la biellette de transmission 33 est suffisamment grande devant la distance $r_2$, on peut négliger l'effet de l'angle d'inclinaison $\beta$ de la biellette de transmission 33. Sous cette approximation, le déplacement axial y de l'extrémité avant 34 en fonction de l'actionnement x de la tige d'entrée est donné par les équations paramétriques (où on a pris un angle $\alpha$ nul à la position de repos) :

$$x = \alpha . r_1$$

$$y = \alpha . r_1 + r_2(1 - \cos \alpha)$$

Un point d'inflexion existe donc pour $\alpha = \frac{\pi}{2}$. L'angle d'origine à la position de repos peut être modifié pour régler la courbe de réaction de ce dispositif.

Outre la fonction de transfert cinématique ci-dessus, l'effort de réaction F est aussi influencé par un facteur multiplicatif de transfert d'effort L, qui vaut ici :

$$L = \frac{r_2 + r_1 \sin \alpha}{r_2}$$

La force de réaction F est finalement donnée par :

$$F = k . y . L$$

où k est la raideur du ressort 5. Cette force peut présenter les propriétés illustrées sur la figure 2.

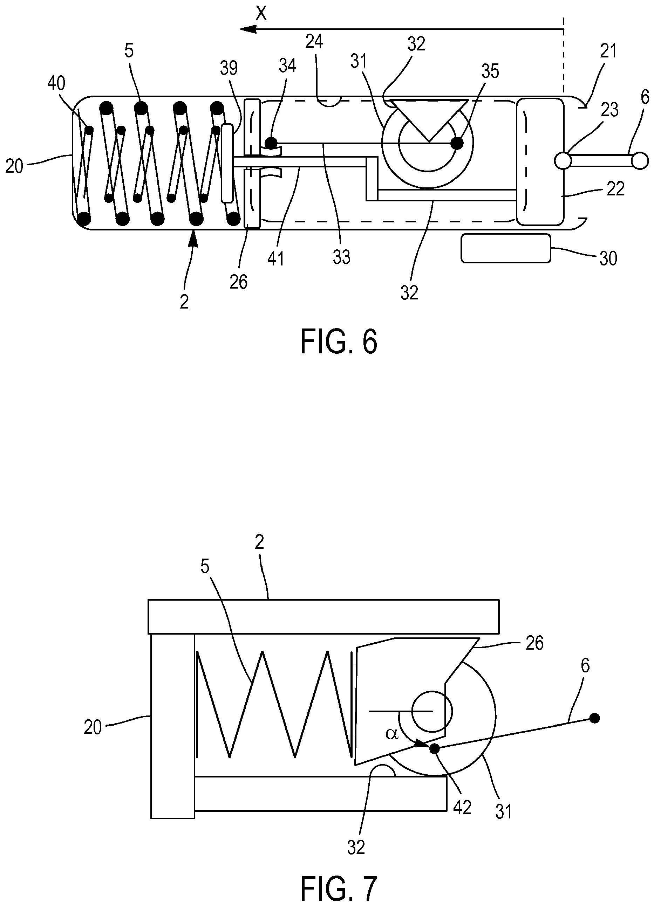

La figure 6 illustre un autre exemple de système de roue dentée et crémaillère dans lequel la roue dentée 31 est à axe fixe. Les éléments analogues ou identiques à ceux des figures 4 et 5 sont désignés par le même chiffre de référence et ne seront pas décrits à nouveau. Ici, le palier 36 est attaché à la paroi périphérique 24 du boitier 2 tandis que la crémaillère 32 est liée à la face avant du piston 22, de manière que l'actionnement de la tige d'entrée 6 selon l'axe X entraine une rotation de la roue dentée 31, et donc une avancée de la biellette de transmission 33, puis un recul si l'angle dépasse un demi-tour. La biellette de transmission 33 actionne le ressort 5 par l'intermédiaire de l'insert glissant 26. Parallèlement, un deuxième ressort 40 peut être monté dans le boitier 2 à l'intérieur du ressort 5 pour coopérer avec un plateau de poussée 39 fixé à l'extrémité avant d'une tige de poussée 41 solidaire du piston 22, par exemple fixée au piston 22 par l'intermédiaire de la crémaillère 32.

Le déplacement axial y de l'extrémité avant 34 en fonction de l'actionnement x de la tige d'entrée est donnée par les équations paramétriques (où on a pris un angle $\alpha$ nul à la position de repos) :

$$x = \alpha . r_1$$

$$y = r_2(1 - \cos \alpha)$$

Un point d'inflexion existe donc pour $\alpha = \frac{\pi}{2}$. L'angle d'origine à la position de repos peut être modifié pour régler la courbe de réaction de ce dispositif. Dans ce mode de réalisation, il est possible de réaliser une portion descendante (portion 15) dans la courbe caractéristique d'effort de réaction, puis une remontée (portion 37) avant la butée de fin de course.

La figure 7 illustre un autre exemple de système de roue dentée et crémaillère. Les éléments analogues ou identiques à ceux des figures 4 et 5 sont désignés par le même chiffre de référence et ne seront pas décrits à nouveau. La roue dentée 31 est montée en rotation dans un palier solidaire de l'insert glissant 26.

La crémaillère 32 parallèle à l'axe du boitier 2 et engrenant avec la roue dentée 31 est fixée à l'intérieur du boitier 2. L'extrémité avant 42 de la tige d'entrée 6 est liée à la roue dentée 31 par un pivot d'axe parallèle à l'axe de rotation de la roue dentée. Ainsi, il n'est pas nécessaire de prévoir un piston 22 dans ce cas et le nombre de pièces est particulièrement réduit.

Si on néglige l'angle d'inclinaison de la tige d'entrée 6, le déplacement axial y de l'extrémité avant 42 en fonction de l'actionnement x de la tige d'entrée est donnée par les équations paramétriques (où on a pris un angle $\alpha$ nul à la position de repos) :

$$x = \alpha . r_1$$

$$y = \alpha . r_1 + r_2(1 - \cos \alpha)$$

Un point d'inflexion existe donc pour $\alpha = \frac{\pi}{2}$. L'angle d'origine à la position de repos peut être modifié pour régler la courbe de réaction de ce dispositif.

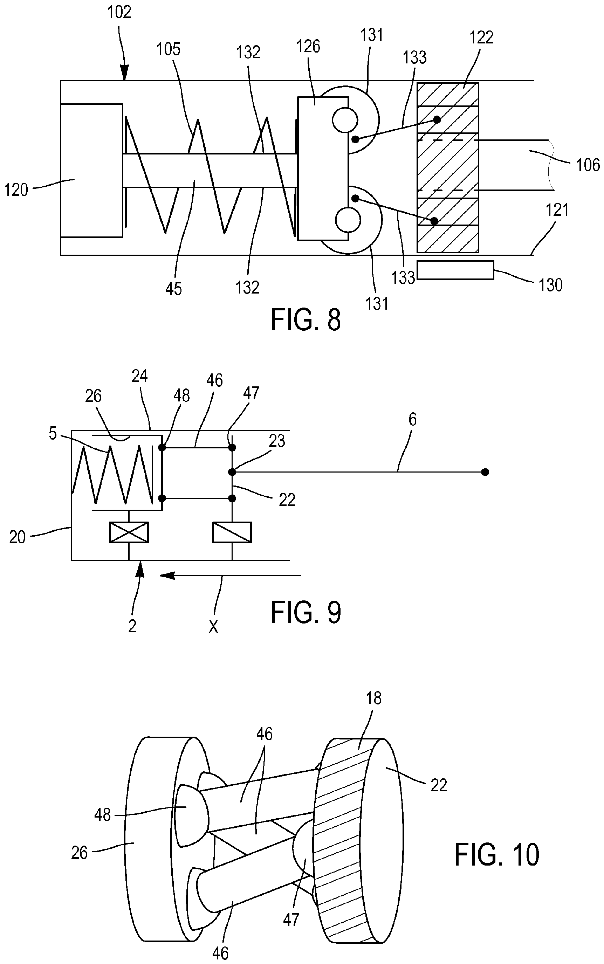

Le mode de réalisation de la figure 8 illustre un autre exemple de système de roue dentée et crémaillère. Les éléments analogues ou identiques à ceux des figures 4 et 5 sont désignés par le même chiffre de référence augmenté de 100. Le mode de réalisation de la figure 8 fonctionne similairement à celui de la figure 7, mais avec trois modifications, qui peuvent être envisagées indépendamment les unes des autres :

- un piston 122 est maintenant inséré entre la tige d'entrée 106 et la biellette de transmission 133,

- les systèmes de roue dentée et crémaillère sont doublés pour équilibrer les efforts. L'insert glissant 126 porte donc deux paliers dans lesquels sont montées deux roues dentées 131 qui engrènent sur deux crémaillères 132.

- Le sens de rotation des roues dentées est inversé en plaçant les crémaillères 132 sur une tige centrale 45 passant entre les deux roues dentées 131. La tige centrale 45 s'étend dans le boitier 102 le long de l'axe X en saillie depuis la paroi de fond 120, qui est ici épaissie pour faciliter la fixation de la tige centrale 45. Le ressort 105 et l'insert glissant 126 et sont successivement engagés sur la tige centrale 45.

Les figures 9 à 11 illustrent un autre mode de réalisation du dispositif de génération d'effort 1 qui exploite les propriétés des cycloïdes autour d'un axe parallèle à l'axe X. Sur la figure 9, les éléments analogues ou identiques à ceux de la figure 3 sont désignés par le même chiffre de référence et ne seront pas décrits à nouveau.

Comme indiqué dans le schéma cinématique de la figure 9, le piston 22 est ici guidé en translation hélicoïdale dans le boitier 2 par l'action d'un filetage extérieur 18 du piston 22 et/ou d'un filetage intérieur (non représenté) du boitier 2. L'angle d'hélice doit être supérieur à 45°, par exemple entre 60° et 80°.

L'insert glissant 26 est au contraire immobilisé en rotation par rapport à l'axe X, par exemple par des cannelures non représentées. En outre, trois biellettes de transmission 46 présentent respectivement une extrémité arrière liée par une première rotule 47 au piston 22 et une extrémité avant liée par une deuxième rotule 48 à l'insert glissant 26. Sur la figure 10, les biellettes de transmission 46 présentent une orientation inclinée par rapport l'axe X, correspondant dans la position de repos de la tige d'entrée 6.

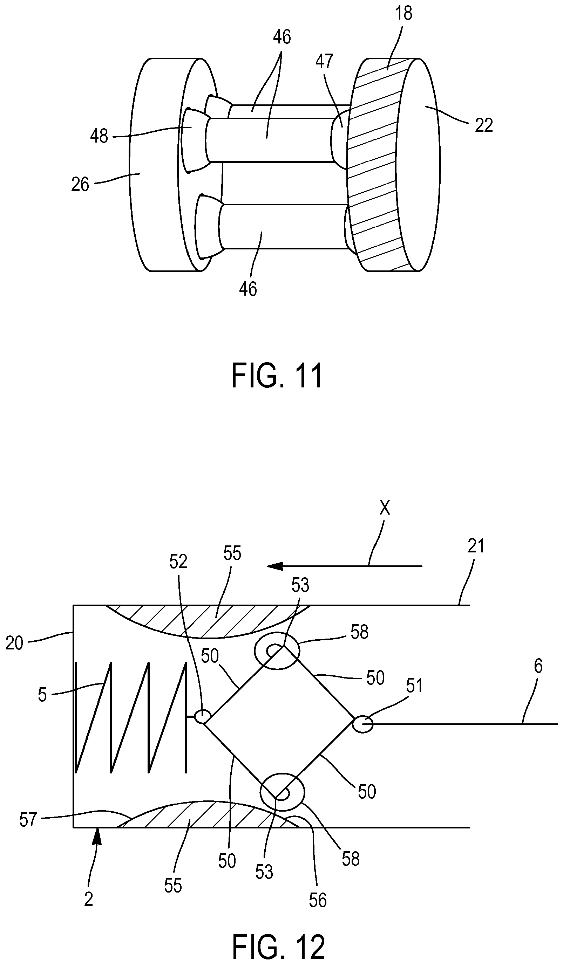

Sous l'effet de la rotation du piston 22 autour de l'axe X lors de l'actionnement de la tige d'entrée 6, les biellettes de transmission 46 se redressent le long de l'axe X jusqu'à la position alignée illustrée sur la figure 11, puis s'inclinent à nouveau par rapport l'axe X si le piston 22 continue d'avancer en tournant.

La figure 12 illustre un autre mode de réalisation du dispositif de génération d'effort 1. Les éléments analogues ou identiques à ceux de la figure 3 sont désignés par le même chiffre de référence et ne seront pas décrits à nouveau.

Le convertisseur cinématique comporte ici quatre bras rigides 50 assemblés sous la forme d'un quadrilatère articulé. Le quadrilatère articulé présente un sommet arrière 51 couplé à la tige d'entrée 6 et un sommet avant 52 couplé à l'extrémité arrière du ressort 5. Le quadrilatère articulé présente enfin deux sommets intermédiaires 53 diagonalement opposés disposés en saillie transversalement vers la paroi périphérique 24 du boitier 2. Un élément de restriction 55 est fixé dans le boitier 2 à une position située devant les deux sommets intermédiaires 53 du quadrilatère articulé dans la position de repos de la tige d'entrée 6. L'élément de restriction 55 délimitant un passage présentant successivement une portion arrière convergente 56 et une portion avant divergente 57 dans la section creuse du boitier 2.

En fonctionnement, les deux sommets intermédiaires 53 munis d'organes de glissement ou de roulement 58 coopèrent avec l'élément de restriction 55 de sorte que, le long de la course d'actionnement de la tige d'entrée 6, les deux sommets intermédiaires 53 se rapprochent en passant dans la portion arrière convergente 56 du passage, ce qui allonge le quadrilatère articulé le long de l'axe X. Puis les deux sommets intermédiaires 53 s'écartent en passant dans la portion avant divergente 57 du passage, ce qui réduit le quadrilatère articulé le long de l'axe du boîtier. Le passage du point le plus étroit du passage correspond à un point d'inflexion de la courbe caractéristique de ce convertisseur cinématique.

En augmentant le rapport entre la dimension transversale du quadrilatère articulé et sa dimension longitudinale, il est éventuellement possible de réaliser une courbe de conversion décroissante dans la portion avant divergente 57 du passage. En adaptant le profil de l'élément de restriction 55, il est aussi possible de produire une remontée de la courbe de conversion (portion 37) juste avant la butée de fin de course.

En pratique, il peut être souhaité que l'effort de réaction du dispositif de génération d'effort 1 présente une hystérèse entre la course d'actionnement et la course de retour de la tige d'entrée 6. Une telle hystérèse est illustrée sur la figure 2, où la courbe 16 représente une caractéristique d'effort plus élevée pour la course d'actionnement et la courbe 17 représente une caractéristique d'effort plus basse pour la course de retour. Cette hystérèse peut être obtenue au moyen de frottements dans les pièces mobiles des convertisseurs cinématiques des divers modes de réalisation. Pour régler le niveau de ces frottements, plusieurs paramètres sont à la disposition de l'homme du métier, notamment les choix des matériaux (coefficients de frottement) et le dimensionnement des pièces (diamètres des axes et des paliers, angle des pas de vis, etc.).

Dans tous les modes de réalisation, il est possible de prévoir un système de réglage du tarage initial du ressort 5, par exemple au moyen d'une vis de réglage engagée dans la paroi de fond 20 pour coopérer avec l'extrémité avant du ressort 5. Cette vis de réglage peut être ajustée de manière manuelle ou motorisée.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de génération d'effort (1) pour une pédale de commande (8), le dispositif comportant :

   un boitier (2, 102) creux, allongé présentant un axe longitudinal (X), une extrémité longitudinale avant fermée par une paroi de fond (20, 120) et une extrémité longitudinale arrière munie d'une ouverture (21, 121),
une tige d'entrée (6, 106) engagée dans l'ouverture du boîtier sensiblement parallèlement à l'axe du boîtier et présentant une extrémité arrière destinée à être accouplée à une pédale de commande (8) à l'extérieur du boîtier et une extrémité avant logée dans le boitier (2, 102), et un ressort (5, 105) déformable selon l'axe du boîtier présentant un extrémité avant en appui directement ou indirectement contre la paroi de fond et une extrémité arrière déplaçable dans le boîtier selon l'axe du boîtier,
la tige d'entrée étant déplaçable le long d'une course d'actionnement sensiblement parallèle à l'axe du boîtier depuis une position de repos dans laquelle la saillie de la tige d'entrée en dehors du boitier est maximale vers des positions d'actionnement pour déformer le ressort,
le dispositif étant **caractérisé par** un convertisseur cinématique (7), non-linéaire et passif, agencé entre l'extrémité avant de la tige d'entrée (6, 106) et l'extrémité arrière du ressort (5, 105) pour convertir un déplacement de la tige d'entrée en un déplacement de l'extrémité arrière du ressort.

2. Dispositif selon la revendication 1, dans lequel le convertisseur cinématique comporte un élément glisseur (26, 126) logé dans le boitier et guidé en translation le long de l'axe du boîtier, l'extrémité arrière du ressort étant en appui contre une face avant de l'élément glisseur (26, 126).

3. Dispositif selon l'une des revendications 1 ou 2, dans lequel le convertisseur cinématique comporte un piston (22, 122) logé dans le boitier et guidé en translation le long de l'axe du boîtier, l'extrémité avant de la tige d'entrée étant liée à une face arrière du piston.

4. Dispositif selon les revendications 2 et 3, dans lequel le piston (22) est guidé en translation hélicoïdale dans le boitier (2) par l'action d'un filetage extérieur (18) du piston et/ou d'un filetage intérieur du boîtier, l'élément glisseur (26) étant immobilisé en rotation par rapport à l'axe du boîtier, le convertisseur cinématique comportant en outre une biellette de transmission (46) présentant une extrémité arrière liée par une première rotule (47) au piston (22) et une extrémité avant (48) liée par une deuxième rotule à l'élément glisseur (26), la biellette de transmission présentant une orientation inclinée par rapport l'axe (X) du boîtier dans la position de repos de la tige d'entrée, la biellette de transmission étant configurée pour, sous l'effet de la rotation du piston autour de l'axe du boîtier le long de la course d'actionnement de la tige d'entrée, se redresser le long de l'axe du boîtier dans une première plage de fonctionnement et s'incliner à nouveau par rapport l'axe du boîtier dans une deuxième plage de fonctionnement et le rendement de conversion axial du convertisseur cinématique (7) est défini comme un rapport entre un déplacement axial de l'extrémité arrière du ressort (5) et un déplacement axial de l'extrémité avant de la tige d'entrée (6), le convertisseur cinématique présentant successivement, le long de la course d'actionnement de la tige d'entrée, la première plage de fonctionnement (L1) dans laquelle le rendement de conversion axial du convertisseur cinématique est croissant et la deuxième plage de fonctionnement (L2) dans laquelle le rendement de conversion axial du convertisseur cinématique est décroissant.

5. Dispositif selon la revendication 4, dans lequel plusieurs biellettes de transmission (46) parallèles sont agencées entre le piston (22) et l'élément glisseur (26), les biellettes de transmission étant distribuées de manière régulière dans une direction circonférentielle autour d'un axe du piston.

6. Dispositif selon la revendication 3, dans lequel le convertisseur cinématique comporte en outre une lame de transmission (27) flexible arquée présentant une extrémité arrière couplée au piston (22) et une extrémité avant couplée à l'extrémité arrière du ressort (5) ou à l'élément glisseur (26), la lame de transmission présentant un ventre s'étendant transversalement vers une paroi périphérique (24) du boitier dans la position de repos de la tige d'entrée, le boitier présentant un élément de restriction (29) fixé dans le boitier à une position située entre l'élément glisseur et le ventre de la lame de transmission dans la position de repos de la tige d'entrée, l'élément de restriction délimitant un passage (29) de plus petite dimension que la section creuse du boitier, la lame de transmission étant engagée dans le passage de l'élément de restriction de sorte que, le long de la course d'actionnement de la tige d'entrée (6), le ventre de la lame de transmission s'écrase en pénétrant dans le passage et augmente ainsi l'extension de la lame de transmission le long de l'axe du boîtier dans une première plage de fonctionnement et le ventre de la lame de transmission se redéploie en ressortant du passage de l'autre côté de l'élément de restriction et diminue ainsi l'extension de la lame de transmission le long de l'axe du boîtier dans une deuxième plage de fonctionnement et le rendement de conversion axial du convertisseur cinématique (7) est défini comme un rapport entre un déplacement axial de l'extrémité arrière du ressort (5) et un déplacement axial de l'extrémité avant de la tige d'entrée (6), le convertisseur cinématique présentant successivement, le long de la course d'actionnement de la tige d'entrée, la première plage de fonctionnement (L1) dans laquelle le rendement de conversion axial du convertisseur cinématique est croissant et la deuxième plage de fonctionnement (L2) dans laquelle le rendement de conversion axial du convertisseur cinématique est décroissant.

7. Dispositif selon la revendication 1, dans lequel le convertisseur cinématique comporte en outre : quatre bras rigides (50) assemblés sous la forme d'un quadrilatère articulé, le quadrilatère articulé présentant un sommet arrière (51) couplé au piston (22) ou à la tige d'entrée (6) et un sommet avant (52) diagonalement opposé couplé à l'élément glisseur (26) ou à l'extrémité arrière du ressort (5), le quadrilatère articulé présentant deux sommets intermédiaires (53) diagonalement opposés disposés en saillie transversalement vers une paroi périphérique du boitier dans la position de repos de la tige d'entrée, le boitier présentant un élément de restriction (55) fixé dans le boitier à une position située devant les deux sommets intermédiaires du quadrilatère articulé dans la position de repos de la tige d'entrée (6), l'élément de restriction délimitant un passage présentant successivement une portion arrière convergente (56) et une portion avant divergente (57) dans la section creuse du boitier, les deux sommets intermédiaires (53) du quadrilatère articulé étant munis d'organes de glissement ou de roulement (58) coopérant avec l'élément de restriction de sorte que, le long de la course d'actionnement de la tige d'entrée, les deux sommets intermédiaires du quadrilatère articulé se rapprochent en passant dans la portion arrière convergente du passage, ce qui allonge le quadrilatère articulé le long de l'axe du boîtier dans la première plage de fonctionnement, et les deux sommets intermédiaires (53) du quadrilatère articulé s'écartent en passant dans la portion avant divergente du passage, ce qui réduit le quadrilatère articulé le long de l'axe du boîtier dans la deuxième plage de fonctionnement et le rendement de conversion axial du convertisseur cinématique (7) est défini comme un rapport entre un déplacement axial de l'extrémité arrière du ressort (5) et un déplacement axial de l'extrémité avant de la tige d'entrée (6), le convertisseur cinématique présentant successivement, le long de la course d'actionnement de la tige d'entrée, la première plage de fonctionnement (L1) dans laquelle le rendement de conversion axial du convertisseur cinématique est croissant et la deuxième plage de fonctionnement (L2) dans laquelle le rendement de conversion axial du convertisseur cinématique est décroissant.

8. Dispositif selon la revendication 3, dans lequel le convertisseur cinématique comporte en outre :

  une roue dentée (31) présentant un axe de rotation perpendiculaire à l'axe du boitier, la roue dentée étant monté en rotation dans un palier solidaire de l'un parmi le piston (22) et le boitier (2),

une crémaillère (32) parallèle à l'axe du boitier (X) engrenant avec la roue dentée (31) et solidaire de l'autre parmi le piston (22) et le boitier (2), et
une biellette de transmission (33) présentant une extrémité avant (34) liée à l'extrémité arrière du ressort (5) ou à l'élément glisseur (26) par un premier pivot d'axe parallèle à l'axe de rotation de la roue dentée et une extrémité arrière (35) liée à la roue dentée (31) par un second pivot d'axe parallèle à l'axe de rotation de la roue dentée.

9. Dispositif selon les revendications 2 et 3 prises en combinaison, dans lequel le convertisseur cinématique comporte en outre :

  une roue dentée (131) présentant un axe de rotation perpendiculaire à l'axe du boitier, la roue dentée étant monté en rotation dans un palier solidaire de l'élément glisseur (126),
  une crémaillère (132) parallèle à l'axe du boitier engrenant avec la roue dentée et solidaire du boitier, et
  une biellette de transmission (133) présentant une extrémité arrière liée au piston (122) par un premier pivot d'axe parallèle à l'axe de rotation de la roue dentée et une extrémité avant liée à la roue dentée (131) par un second pivot d'axe parallèle à l'axe de rotation de la roue dentée.

10. Dispositif selon la revendication 9, comportant en outre un insert allongé (45) s'étendant dans le boitier le long de l'axe du boitier en saillie depuis la paroi de fond, l'élément glisseur (126) étant engagé sur l'insert et le ressort (105) étant engagé sur l'insert entre l'élément glisseur entre la paroi de de fond, la crémaillère étant portée par l'insert.

11. Dispositif selon la revendication 10, dans lequel l'insert porte deux crémaillères (132) sur deux surfaces opposées de l'insert (45) et dans lequel deux roues dentées (131) sont montées en rotation sur l'élément glisseur pour engrener respectivement avec chacune des deux crémaillères.

12. Dispositif selon la revendication 2, dans lequel le convertisseur cinématique comporte en outre :

  une roue dentée (31) présentant un axe de rotation perpendiculaire à l'axe du boitier, la roue dentée étant monté en rotation dans un palier solidaire de l'élément glisseur (26), et
  une crémaillère (32) parallèle à l'axe du boitier engrenant avec la roue dentée et solidaire du boitier,
  l'extrémité avant de la tige d'entrée (6) étant liée à la roue dentée (31) par un second pivot d'axe parallèle à l'axe de rotation de la roue dentée.

13. Dispositif selon l'une quelconque des revendications 8 à 12, dans lequel la distance entre le second pivot et le centre de la roue dentée (31, 131) est inférieur au rayon nominal de la roue dentée.

14. Dispositif selon la revendication 3, comportant en outre un capteur de position (30) configuré pour détecter une position axiale du piston.

**Patentansprüche**

1. Eine Krafterzeugungsvorrichtung (1) für ein Steuerpedal (8), wobei die Vorrichtung Folgendes umfasst:

ein hohles, längliches Gehäuse (2, 102) mit einer Längsachse (X), einem vorderen Längsende, das durch eine Bodenwand (20, 120) verschlossen ist, und einem hinteren Längsende, das mit einer Öffnung (21, 121) versehen ist, eine Eingangsstange (6, 106), die in die Gehäuseöffnung im Wesentlichen parallel zur Gehäuseachse eingreift und ein hinteres Ende aufweist, das zum Koppeln mit einem Steuerpedal (8) außerhalb des Gehäuses bestimmt ist, und ein vorderes Ende aufweist, das im Gehäuse (2, 102) aufgenommen ist, und eine Feder (5, 105), die entlang der Achse des Gehäuses verformbar ist, mit einem vorderen Ende, das direkt oder indirekt gegen die Bodenwand abgestützt ist, und einem hinteren Ende, das im Gehäuse entlang der Achse des Gehäuses beweglich ist, wobei die Eingangsstange entlang eines Betätigungshubs bewegbar ist, der im Wesentlichen parallel zur Achse des Gehäuses verläuft, aus einer Ruheposition, in der der Überstand der Eingangsstange außerhalb des Gehäuses maximal ist, in Richtung Betätigungspositionen, um die Feder zu verformen, wobei die Vorrichtung **gekennzeichnet ist durch** einen nichtlinearen und passiven kinematischen Wandler (7), der zwischen dem vorderen Ende der Eingangsstange (6, 106) und dem hinteren Ende der Feder (5, 105) angeordnet ist, um eine Bewegung der Eingangsstange in eine Bewegung des hinteren Endes der Feder umzuwandeln.

2. Die Vorrichtung nach Anspruch 1, wobei der kinematische Wandler ein Gleitelement (26, 126) umfasst, das im Gehäuse untergebracht und entlang der Achse des Gehäuses translatorisch geführt wird, wobei das hintere Ende der Feder gegen eine Vorderseite des Gleitelements (26, 126) abgestützt ist.

3. Die Vorrichtung nach einem der Ansprüche 1 oder 2, wobei der kinematische Wandler einen Kolben (22, 122) umfasst, der im Gehäuse aufgenommen ist und entlang der Achse des Gehäuses translatorisch geführt wird, wobei das vordere Ende der Eingangsstange mit einer Rückseite des Kolbens verbunden ist.

4. Die Vorrichtung nach den Ansprüchen 2 und 3, wobei der Kolben (22) im Gehäuse (2) durch Einwirkung eines Außengewindes (18) des Kolbens und/oder eines Innengewindes des Gehäuses translatorisch spiralförmig geführt wird, wobei das Gleitelement (26) in Bezug auf die Gehäuseachse gegen Verdrehung gesichert ist, wobei der kinematische Wandler ferner eine Übertragungsstange (*biellette de transmission*) (46) umfasst, mit einem hinteren Ende, das über ein erstes Kugelgelenk (47) mit dem Kolben (22) verbunden ist, und einem vorderen Ende (48), das über ein zweites Kugelgelenk mit dem Gleitelement (26) verbunden ist, wobei die Übertragungsstange eine Ausrichtung aufweist, die in der Ruheposition der Eingangsstange bezüglich der Gehäuseachse (X) geneigt ist, wobei die Übertragungsstange konfiguriert ist, um sich in einem ersten Arbeitsbereich unter der Wirkung der Drehung des Kolbens um die Achse des Gehäuses entlang des Betätigungshubs der Eingangsstange entlang der Gehäuseachse aufzurichten, und in einem zweiten Arbeitsbereich bezüglich der Gehäuseachse erneut zu kippen, und wobei der axiale Umwandlungswirkungsgrad des kinematischen Wandlers (7) als ein Verhältnis zwischen einer axialen Verschiebung des hinteren Endes der Feder (5) und einer axialen Verschiebung des vorderen Endes der Eingangsstange (6) definiert ist, wobei der kinematische Wandler entlang des Betätigungshubs der Eingangsstange nacheinander den ersten Betriebsbereich (L1) aufweist, in dem der axiale Umwandlungswirkungsgrad des kinematischen Wandlers steigt, und den zweiten Betriebsbereich (L2) aufweist, in dem der axiale Umwandlungswirkungsgrad des kinematischen Wandlers sinkt.

5. Die Vorrichtung nach Anspruch 4, wobei eine Vielzahl von parallelen Übertragungsstangen (46) zwischen dem Kolben (22) und dem Gleitelement (26) angeordnet ist, wobei die Übertragungsstangen in Umfangsrichtung gleichmäßig um eine Achse des Kolbens verteilt sind.

6. Die Vorrichtung nach Anspruch 3, wobei der kinematische Wandler ferner ein bogenförmiges flexibles Übertragungsblatt (*lame de transmission*) (27) umfasst, das ein mit dem Kolben (22) gekoppeltes hinteres Ende und ein mit dem hinteren Ende der Feder (5) oder dem Gleitelement (26) gekoppeltes vorderes Ende aufweist, wobei das Übertragungsblatt einen Bauch aufweist, der sich in der Ruheposition der Eingangsstange quer zu einer Umfangswand (24) des Gehäuses erstreckt, wobei das Gehäuse ein Begrenzungselement (29) aufweist, das im Gehäuse an einer Position zwischen dem Gleitelement und dem Bauch des Übertragungsblatts in der Ruheposition der Eingangsstange befestigt ist, wobei das Begrenzungselement einen Durchgang (29) mit einer kleineren Abmessung als der hohle Gehäuseabschnitt definiert, wobei das Übertragungsblatt in den Durchgang des Begrenzungselements eingreift, sodass entlang des Betätigungshubs der Eingangsstange (6), in einem ersten Betriebsbereich der Bauch des Übertragungsblatts beim Betreten des Durchgangs gequetscht wird und so die Ausdehnung des Übertragungsblatts entlang der Gehäuseachse erhöht, und sodass in einem zweiten Betriebsbereich sich der Bauch des Übertragungsblatts beim Verlassen des Durchgangs auf der anderen Seite des Begrenzungselements wieder streckt bzw. entfaltet (*se redéploie*) und dadurch die Ausdehnung des Übertragungsblatts entlang der Gehäuseachse verringert, und sodass der axiale Umwandlungswirkungsgrad des kinematischen Wandlers (7) definiert ist als ein Verhältnis zwischen einer axialen Verschiebung des hinteren Endes der Feder (5) und einer axialen Verschiebung des vorderen Endes der Eingangsstange (6), wobei der kinematische Wandler entlang des Betätigungshubs der Eingangsstange nacheinander den ersten Betriebsbereich (L1) aufweist, in dem der axiale Umwandlungswirkungsgrad des kinematischen Wandlers steigt, und den zweiten Betriebsbereich (L2), in dem der axiale Umwandlungswirkungsgrad des kinematischen Wandlers sinkt.

7. Die Vorrichtung nach Anspruch 1, wobei der kinematische Wandler ferner Folgendes umfasst:
vier starre Arme (50), die in Form eines gelenkigen Vierecks montiert sind, wobei das gelenkige Viereck einen hinteren Scheitelpunkt (51) aufweist, der mit dem Kolben (22) oder der Eingangsstange (6) gekoppelt ist, und einen vorderen Scheitelpunkt (52), der diagonal gegenüberliegt und dem Gleitelement (26) oder dem hinteren Ende der Feder (5) gekoppelt ist, wobei das gelenkige Viereck zwei diagonal gegenüberliegende mittlere Scheitelpunkte (53) aufweist, die quer vorstehend hin zu einer Umfangswand des Gehäuses in der Ruheposition der Einlassstange angeordnet sind, wobei das Gehäuse ein Begrenzungselement (55) aufweist, das an einer Position im Gehäuse vor den beiden mittleren Scheitelpunkten des gelenkigen Vierecks in der Ruheposition der Eingangsstange (6) befestigt ist, wobei das Begrenzungselement einen Durchgang begrenzt, der im hohlen Abschnitt des Gehäuses nacheinander einen konvergierenden hinteren Abschnitt (56) und einen divergierenden vorderen Abschnitt (57) aufweist, wobei die beiden mittleren Scheitelpunkte (53) des gelenkigen Vierecks mit Gleit- oder Wälzkörpern (58) versehen sind, die mit dem Begrenzungselement zusammenwirken, sodass, entlang des Betätigungshubs der Eingangsstange, die beiden mittleren Scheitelpunkte des gelenkigen Vierecks sich annähern, wobei sie durch den konvergierenden hinteren Abschnitt des Durchgangs verlaufen, was das gelenkige Viereck entlang der Gehäuseachse im ersten Arbeitsbereich verlängert, und sodass die beiden mittleren Scheitelpunkte (53) des gelenkigen Vierecks sich beim Durchgang durch den divergierenden vorderen Abschnitt des Durchgangs voneinander entfernen, was das gelenkige Viereck entlang der Gehäuseachse im zweiten Betriebsbereich reduziert bzw. verkürzt, und sodass der axiale Umwandlungswirkungsgrad des kinematischen Wandlers (7) als ein Verhältnis zwischen einer axialen Verschiebung des hinteren Endes der Feder (5) und einer axialen Verschiebung des vorderen Endes der Eingangsstange (6) definiert ist, wobei der kinematische Wandler entlang des Betätigungshubs der Eingangsstange nacheinander den ersten Betriebsbereich (L1) aufweist, in dem der axiale Umwandlungswirkungsgrad des kinematischen Wandlers steigt, und den zweiten Betriebsbereich (L2), in dem der axiale Umwandlungswirkungsgrad des kinematischen Wandlers sinkt.

8. Die Vorrichtung nach Anspruch 3, wobei der kinematische Wandler ferner Folgendes umfasst:

ein Zahnrad (31), das senkrecht zur Gehäuseachse eine Drehachse aufweist,
wobei das Zahnrad in einem Lager drehbar gelagert ist, das mit dem einem der Folgenden fest verbunden ist: dem Kolben (22) und dem Gehäuse (2),
eine zur Gehäuseachse (X) parallele Zahnstange (32), die mit dem Zahnrad (31) in Eingriff steht und mit dem anderen der Folgenden fest verbunden ist: dem Kolben (22) und dem Gehäuse (2), und
eine Übertragungsstange (33), die Folgendes aufweist: ein vorderes Ende (34), das verbunden ist mit dem hinteren Ende der Feder (5) oder mit dem Gleitelement (26) durch einen ersten Achsdrehpunkt, der zur Drehachse des Zahnrades parallel ist, und ein hinteres Ende (35), das verbunden ist mit dem Zahnrad (31) durch einen zweiten Achsdrehpunkt, der zur Drehachse des Zahnrades parallel ist.

9. Die Vorrichtung nach den Ansprüchen 2 und 3 in Kombination, wobei der kinematische Wandler ferner Folgendes umfasst:

ein Zahnrad (131), das senkrecht zur Gehäuseachse einer Drehachse aufweist, wobei das Zahnrad in einem Lager drehbar gelagert ist, das mit dem Gleitelement (126) fest verbunden ist,

eine zur Gehäuseachse parallele Zahnstange (132), die mit dem Zahnrad in Eingriff steht und mit dem Gehäuse fest verbunden ist, und

eine Übertragungsstange (133), die Folgendes aufweist: ein hinteres Ende, das mit dem Kolben (122) verbunden ist durch einen ersten Achsdrehpunkt, der zur Drehachse des Zahnrades parallel ist, und ein vorderes Ende, das mit dem Zahnrad (131) verbunden ist durch einen zweiten Achsdrehpunkt, der zur Drehachse des Zahnrades parallel ist.

10. Die Vorrichtung nach Anspruch 9, ferner umfassend einen länglichen Einsatz (45), der sich im Gehäuse von der Bodenwand vorstehend entlang der Gehäuseachse erstreckt, wobei das Gleitelement (126) in den Einsatz eingreift und die Feder (105) in den Einsatz zwischen dem Gleitelement und der Bodenwand eingreift, wobei die Zahnstange vom Einsatz getragen wird.

11. Die Vorrichtung nach Anspruch 10, wobei der Einsatz zwei Zahnstangen (132) auf zwei gegenüberliegenden Oberflächen des Einsatzes (45) trägt, und wobei zwei Zahnräder (131) drehbar auf dem Gleitelement montiert sind, um mit jedem der beiden Zahnstangen in Eingriff zu kommen.

12. Die Vorrichtung nach Anspruch 2, wobei der kinematische Wandler ferner Folgendes umfasst:

ein Zahnrad (31), das senkrecht zur Gehäuseachse eine Drehachse aufweist, wobei das Zahnrad in einem Lager drehbar gelagert ist, das mit dem Gleitelement (26) fest verbunden ist, und

eine zur Gehäuseachse parallele Zahnstange (32), die mit dem Zahnrad in Eingriff steht und mit dem Gehäuse fest verbunden ist,

wobei das vordere Ende der Eingangsstange (6) durch einen zweiten Achsdrehpunkt mit dem Zahnrad (31) verbunden ist, der zur Drehachse des Zahnrades parallel ist.

13. Die Vorrichtung nach irgendeinem der Ansprüche von 8 bis 12, wobei der Abstand zwischen dem zweiten Achsdrehpunkt und der Mitte des Zahnrades (31, 131) kleiner ist als der Nennradius des Zahnrades.

14. Die Vorrichtung nach Anspruch 3, ferner umfassend einen Positionssensor (30), der konfiguriert ist, um eine axiale Position des Kolbens zu erfassen.

## Claims

1. A dynamic stress generator device (1) for a command pedal (8), the device comprising:

an elongated, hollow housing (2, 102) with a longitudinal axis (X), a front longitudinal end closed by a bottom wall (20, 120) and a rear longitudinal end equipped with an opening (21, 121),

an input rod (6, 106) engaged in the housing opening approximately parallel to the housing axis and with a rear end intended to be coupled with the command pedal (8) outside the housing and a front end encased in the housing (2,102), and

a spring (5, 105) that can deform according to the housing axis with a front end directly or indirectly supported against the bottom wall and a rear end that can be moved according to the housing axis,

the input rod being able to move along an operating stroke approximately parallel to the housing axis from a resting position, in which the input rod has a maximum projection outside the housing towards the operating positions in order to deform the spring,

the device being **characterised by** a non-linear, passive, kinematic converter (7), arranged between the front end of the input rod (6, 106) and the rear end of the spring (5, 105) to convert movement of the input rod into movement of the rear end of the spring.

2. A device according to claim 1, in which the kinematic converter comprises a sliding element (26, 126) encased in the housing and guided forward along the housing axis, the rear end of the spring being supported against the front side of the sliding element (26, 126).

3. A device according to either claim 1 or 2, in which the kinematic converter comprises a piston (22, 122) encased in the housing and guided forward along the housing axis, the front end of the input rod being connected to the front side of the piston.

4. A device according to claims 2 and 3, in which the piston (22) is guided forward in a spiral motion into the housing (2) by the operation of an external thread (18) on the piston and/or a thread inside the housing, the sliding element (26) being immobilised in rotation relating to the housing axis, the kinematic converter also comprising a drive rod (46) with a rear end connected to the piston (22) by the first ball joint (47) and a front end (48) connected to the sliding element (26) by the second ball joint, the drive rod being tilted in relation to the housing axis (X) when the input rod is in the resting position, the drive rod being configured to straighten along the housing axis in the first operating range under the influence of the piston rotating around the housing axis along the operating stroke of the input rod, and to tilt again in relation to the housing axis in the second operating range, and the output of the axial conversion from the kinematic converter (7) being defined as a relationship between the axial movement of the rear end of the spring (5) and the axial movement of the front end of the input rod (6), the kinematic converter consecutively producing, along the operating stroke of the input rod, the first operating range (L1), in which the output of the axial conversion from the kinematic converter is increasing, and the second operating range (L2), in which the output of the axial conversion from the kinematic converter is decreasing.

5. A device according to claim 4, in which several parallel drive rods (46) are arranged between the piston (22) and the sliding element (26), the drive rods being spaced at regular intervals in a circumferential direction around the piston axis.

6. A device according to claim 3, in which the kinematic converter also comprises a flexible, arched drive blade (27) with a rear end coupled with the piston (22) and a front end coupled with the rear end of the spring (5) or the sliding element (26), the drive blade with an underside extending transversally towards the peripheral wall (24) of the housing when the input rod is in the resting position, the housing with a restriction element (29) attached in the housing and arranged between the sliding element and the underside of the drive blade when the input rod is in the resting position, the restriction element delimiting a passage (29), which is smaller than the hollow section of the housing, the drive blade being engaged into the passage created by the restriction element in such a way that the underside of the drive blade flattens when entering the passage along the operating stroke of the input rod (6) and thereby increases the extension of the drive blade along the housing axis in the first operating range, and the underside of the drive blade unfolds on travelling through the passage from the other side of the restriction element, thereby reducing the extension of the drive blade along the housing axis in the second operating range, and the output of the axial conversion from the kinematic converter (7) being defined as a relationship between the axial movement of the rear end of the spring (5) and the axial movement of the front end of the input rod (6), the kinematic converter consecutively producing, along the operating stroke of the input rod, the first operating range (L1), in which the output of the axial conversion from the kinematic converter is increasing, and the second operating range (L2), in which the output of the axial conversion from the kinematic converter is decreasing.

7. A device according to claim 1, in which the kinematic converter also comprises:
four rigid arms (50) assembled in the form of a four-bar linkage, the four-bar linkage with a rear apex (51) coupled with the piston (22) or the input rod (6) and a front apex (52) arranged diagonally and coupled with the sliding element (26) or the rear end of the spring (5), the four-bar linkage with two intermediate apexes (53) arranged diagonally and positioned in a transversal projection towards the peripheral wall of the housing when the input rod is in the resting position, the housing with a restriction element (55) attached in the housing and arranged in front of the two intermediate apexes of the four-bar linkage when the input rod (6) is in the resting position, the restriction element delimiting a passage and consecutively producing a converging rear part (56) and a diverging front part (57) in the hollow section of the housing, the two intermediate apexes (53) of the four-bar linkage being equipped with sliding or rolling units (58) working with the restriction element in such a way that the two intermediate apexes of the four-bar linkage connect when entering the converging rear part of the passage along the operating stroke of the input rod, extending the four-bar linkage along the housing axis in the first operating range, and the two intermediate apexes (53) of the four-bar linkage displace on entering the diverging front part of the passage, shortening the four-bar linkage along the housing axis in the second operating range, and the output of the axial conversion from the kinematic converter (7) is defined as a relationship between the axial movement of the rear end of the spring (5) and the axial movement of the front end of the input rod (6), the kinematic converter consecutively producing, along the stroke of the input rod, the first operating range (L1), in which the output of the axial conversion from the kinematic converter is increasing, and the second operating range (L2), in which the output of the axial conversion from the kinematic converter is decreasing.

8. A device according to claim 3, in which the kinematic converter also comprises:

a sprocket (31) with a rotational axis perpendicular to the housing axis, the sprocket being mounted in rotation on a bearing interdependent on the one between the piston (22) and the housing (2),
a rack and pinion (32) parallel to the housing axis (X) engaging with the sprocket (31) and interdependent on the other one between the piston (22) and the housing (2), and a drive rod (33) with a front end (34) connected to the rear end of the spring (5) or to the sliding element (26) by the first pivot bolt parallel to the rotational axis of the sprocket and a rear end (35) connected to the sprocket (31) by a second pivot bolt parallel to the rotational axis of the sprocket.

9. A device according to claims 2 and 3 combined, in which the kinematic converter also comprises:

a sprocket (131) with a rotational axis perpendicular to the housing axis, the sprocket being mounted in rotation in a bearing interdependent on the sliding element (126),
a rack and pinion (132) parallel to the housing axis engaging with the sprocket and interdependent on the housing, and
a drive rod (133) with a rear end connected to the piston (122) by the pivot bolt parallel to the rotational axis of the sprocket and a front end connected to the sprocket (131) by the second pivot bolt parallel to the rotational axis of the sprocket.

10. A device according to claim 9, also comprising an elongated insert (45) extending into the housing along the housing axis and projecting towards the bottom wall, the sliding element (126) being engaged with the insert and the spring (105) being engaged with the insert between the sliding element and the bottom wall, the rack and pinion being supported by the insert.

11. A device according to claim 10, in which the insert supports two rack and pinions (132) on the two opposing surfaces of the insert (45), and in which two sprockets (131) are mounted in rotation on the sliding element to engage respectively with each of the two rack and pinions.

12. A device according to claim 2, in which the kinematic converter also comprises:

a sprocket (31) with a rotational axis perpendicular to the housing axis, the sprocket being mounted in rotation in a bearing interdependent on the sliding element (26), and
a rack and pinion (32) parallel to the housing axis engaging with the sprocket and interdependent on the housing,
the front end of the input rod (6) being connected to the sprocket (31) by the second pivot bolt parallel to the rotational axis of the sprocket.

13. A device according to any of claims 8 to 12, in which the distance between the second pivot bolt and the centre of the sprocket (31, 131) is smaller than the nominal radius of the sprocket.

14. A device according to claim 3, also comprising a position sensor (30) configured to detect the axial position of the piston.

FIG. 1

FIG. 2

FIG. 3

FIG. 4

FIG. 5

FIG. 6

FIG. 7

FIG. 8

FIG. 9

FIG. 10

FIG. 11

FIG. 12

**RÉFÉRENCES CITÉES DANS LA DESCRIPTION**

**Documents brevets cités dans la description**

- WO 2014048661 A
- US 2005082909 A1
- EP 2927064 A2